# EUROPEAN PATENT SPECIFICATION

(11) **EP 2 629 010 B1**
(45) Date of publication and mention of the grant of the patent: **31.10.2018**
(21) Application number: 12178531.5
(22) Date of filing: 30.07.2012
(51) Int. Cl.: F24S 23/71, F24S 23/79

(54) **Burner for gas ovens**
Brenner für Gasöfen
Brûleur pour fours à gaz

(30) Priority: 16.02.2012 CN 201220050004 U
(43) Date of publication of application: 21.08.2013
(73) Proprietor: Liang, Jinhong, Foshan City, Guangdong 528305 (CN)
(72) Inventor: Liang, Jinhong, Foshan City, Guangdong 528305 (CN)
(74) Representative: Boden, Keith McMurray

(56) References cited:
- EP-A1- 0 797 048
- EP-A2- 1 531 304
- EP-A2- 2 226 560
- WO-A1-2004/113792
- CN-Y- 2 916 395

## Description

### Technical Field

The present invention relates to a burner for gas ovens, especially to a burner having three rings of fire pores for embedded gas ovens which can be used with European styled stoves.

### Background Art

In the prior art, burners for gas ovens that have three rings of fire pores are featured in that the gas carries some air through injecting passages into pre-mixing chambers and then passes through a variety of passages until erupting from the fire pores of inner and outer rings for burning. As burners of the said type are provided with double nozzles, multiple nozzles or side nozzles, they have complicated structures and lower thermal load.

### Summary of Invention

An object of the present invention aims to overcome the above said drawbacks of the prior art and provides a burner which has only one nozzle but is capable of achieving the advantages of high thermal load, simple structure, facilitating inspection during the manufacturing, quicker cooking, cost effectiveness and environmental friendliness.

To achieve the above said objects, the present invention provides a burner for gas ovens, comprising a tapered base with a nozzle, a distributor mounted on the tapered base, an outer annular cover and an inner circular cover, wherein the distributor includes a cross-shaped lower portion and a upper portion mated with the lower portion; the tapered base includes a tapered gas mixing chamber, a gas passage in communication with the nozzle and four symmetrically disposed air passages one end of which being in communication with the tapered gas mixing chamber; characterized in that the lower portion has two wider arms on each of which a recess with a depth of 1-1.5mm is formed and an oval boss in the center thereof, an injecting passage being formed in the center of the oval boss, the injecting passage being in communication with the tapered gas mixing chamber; the bottom side of the upper portion is provided with two symmetrical wide troughs, a central gas mixing chamber in communication with the wide troughs and two symmetrical narrow troughs with barrier therein; the upper side of the upper portion is provided with a central circular chamber and an outer annular chamber, the outer annular chamber having two symmetrically disposed gas outlets; one end of the each wide trough is in communication with the central gas mixing chamber and the other with a outlet; the wide trough is wider than the narrow trough; the central gas mixing chambers, the wide troughs, the outlets and the recesses in the wider arms of the cross-shaped lower portion constitute two main gas passages for mixing, delivering and ejecting the gas and air; a gap of 2-3mm is configured between opposite surfaces of the central gas mixing chambers and the oval boss; fire pores or slots are provided on the wall of the central circular chamber and fire teeth are provided on the wall of the outer annular chamber; two inlets are formed symmetrically in the outer annular chamber; the narrow troughs are isolated from the central gas mixing chamber by barriers; one end of the each narrow trough is in communication with the central circular chamber and the other with a inlet; the two narrow troughs, the inlets and the other two arms of the cross-shaped lower portion constitute two additional gas passages, each of which is in communication with the central circular chamber.

The oval boss includes two arcwise surfaces corresponding to main gas passages, one of each surfaces includes a upper surface with round of R18-R22mm and a lower surface with round of R2-R4mm and said surfaces co-operative with the gas mixing chamber to form two symmetrical Venturi mixing chambers; each of the additional gas passages is isolated from the central gas mixing chamber by a barrier, the portions of the oval boss corresponding to the additional gas passages are vertical walls. Each of wide troughs has a width **W** preferably in the range of 26.5-29mm and a height **HI** preferably in the range of 7.5-9.5 mm.

The oval boss has a height in the range of 7.5-8.5mm, preferably 8 mm.

The axis of the each fire pore of the central circular chamber forms an angle *α* which is in the range of 20-30°, preferably 22°, with respect to the horizontal level.

Each of the barriers has an inclined surface which forms an angle β with respect to the horizontal level in the range of 60°-64°, preferably 62.5°, wherein each inclined surface is co-operative with the corresponding vertical wall of the cross-shaped lower portion to isolate the additional gas passages from the central gas mixing chamber.

The inlet of each air passage is in the form of horn.

Compared with prior arts, the present invention has many advantages. For instance, by providing two symmetrical mixing chambers with Venturi effect, the present burner may achieve the same level as burners with multiple Venturi chambers and burners with single Venture chamber. In addition, provided with only one nozzle, the present burner can achieve the advantages of high thermal load, simple structure, facilitating inspection during the manufacturing, quickening cooking, cost saving and protecting environment. The present burner is able to be used with pans with different shapes and sizes.

### Brief Description Of Drawings

Preferred embodiments of the present invention will now be described hereinbelow by way of example only with reference to the accompanying drawings, in which:
Fig. 1 shows a general schematic view of an assembled burner according to the invention;
Fig. 2 shows an exploded schematic view of a burner according to the invention;
Fig. 3 shows a top view of a burner according to this invention;
Fig. 4 shows a cross-sectional view taken along A-A of Fig. 3;
Fig. 5 shows a cross-sectional view taken along B-B of Fig. 3;
Fig. 6 shows a perspective view of an upper portion from the bottom;
Fig. 7 shows a bottom view of an upper portion;
Fig. 8 shows a top view of an upper portion;
Fig. 9 shows a cross-sectional view taken along C-C of Fig. 8;
Fig. 10 shows a cross-sectional view taken along D-D of Fig. 8;
Fig. 11 shows a cross-sectional view taken along K-K of Fig. 8;
Fig. 12 shows a perspective view of a lower portion from the bottom;
Fig. 13 shows a top view of a lower portion;
Fig. 14 shows a cross-sectional view taken along E-E of Fig. 13;
Fig. 15 shows a cross-sectional view taken along F-F of Fig. 13;
Fig. 16 shows a perspective view of the tapered base;
Fig. 17 shows a bottom view of the tapered base;
Fig. 18 shows a top view of the tapered base;
Fig. 19 shows a cross-sectional view taken along G-G of Fig. 18;
Fig. 20 shows a cross-sectional view taken along H-H of Fig. 18;

### Detailed Description Of Invention

Now referring to drawings, a burner according to the present invention will be described in detail below in connection with embodiments.

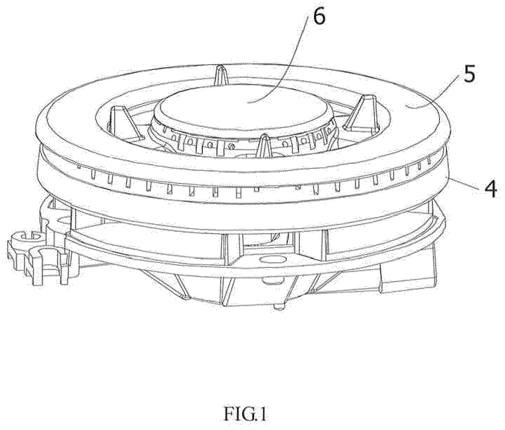

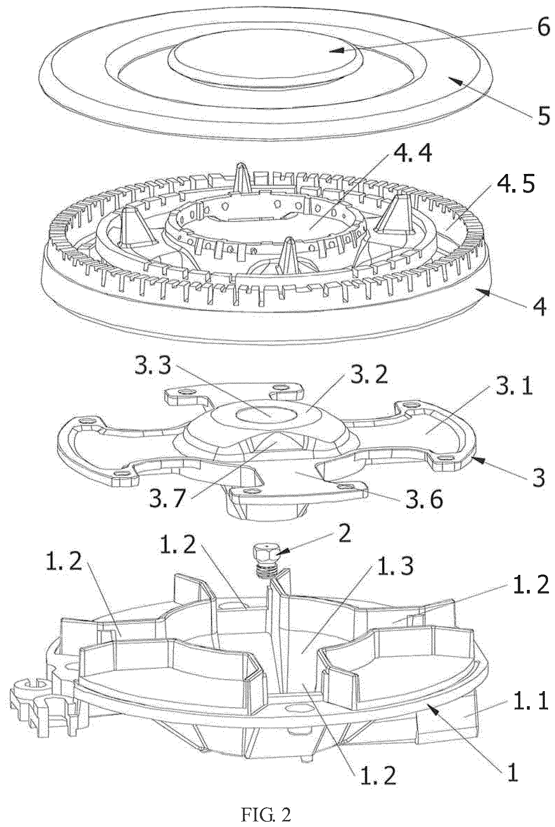

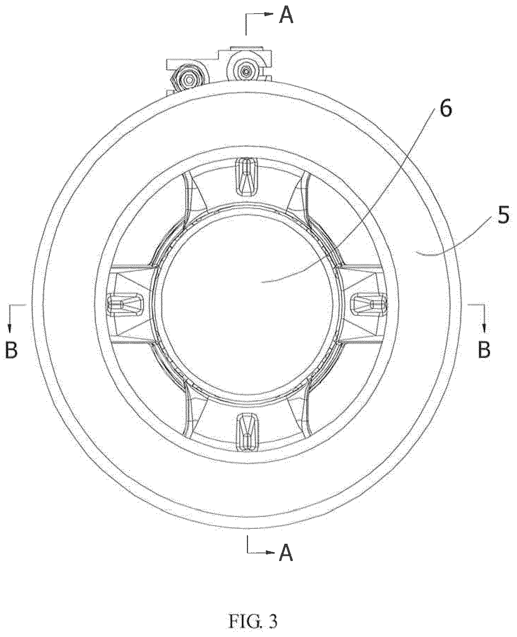

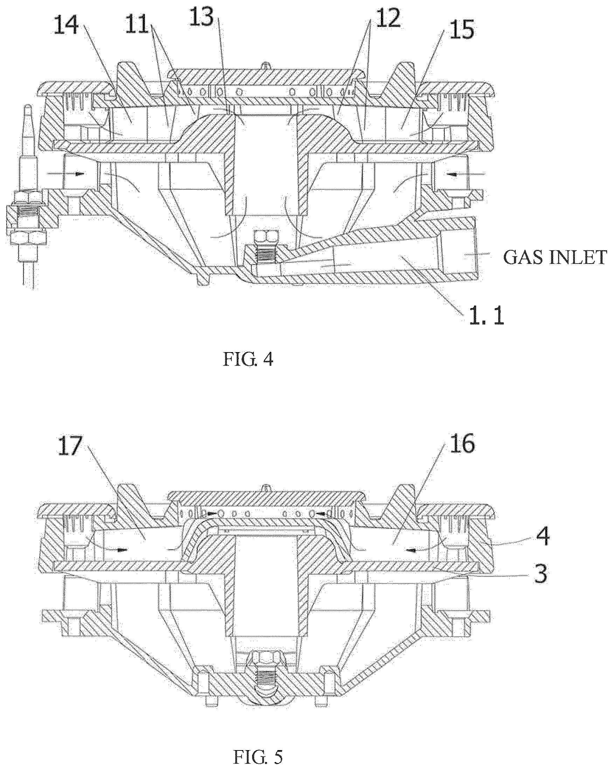

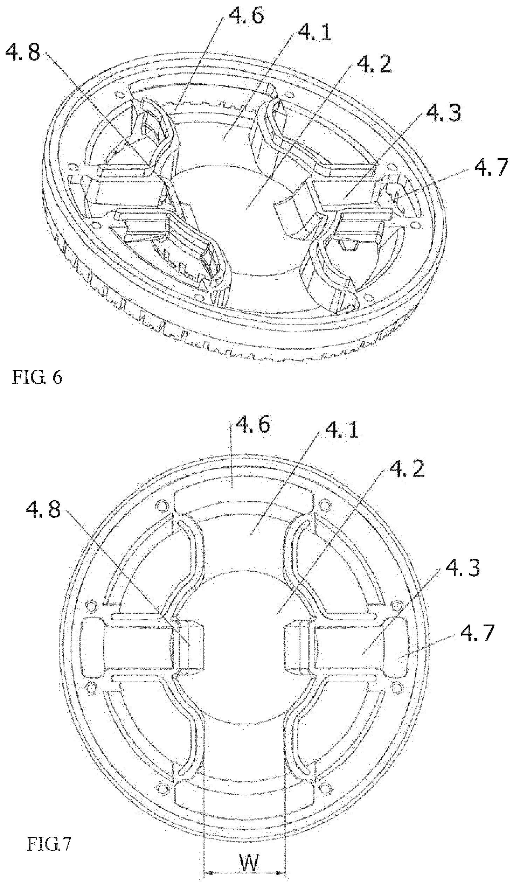

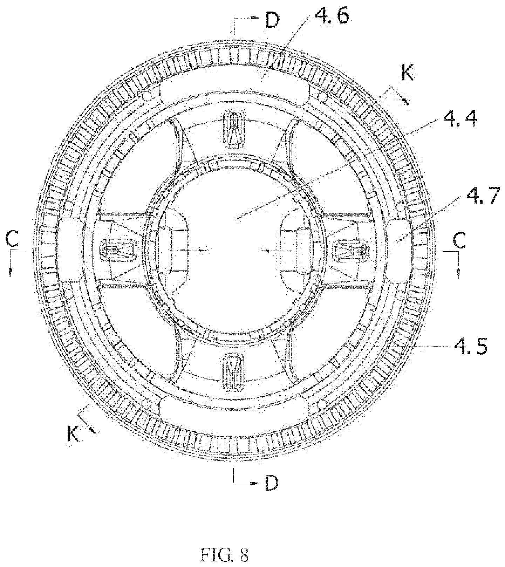

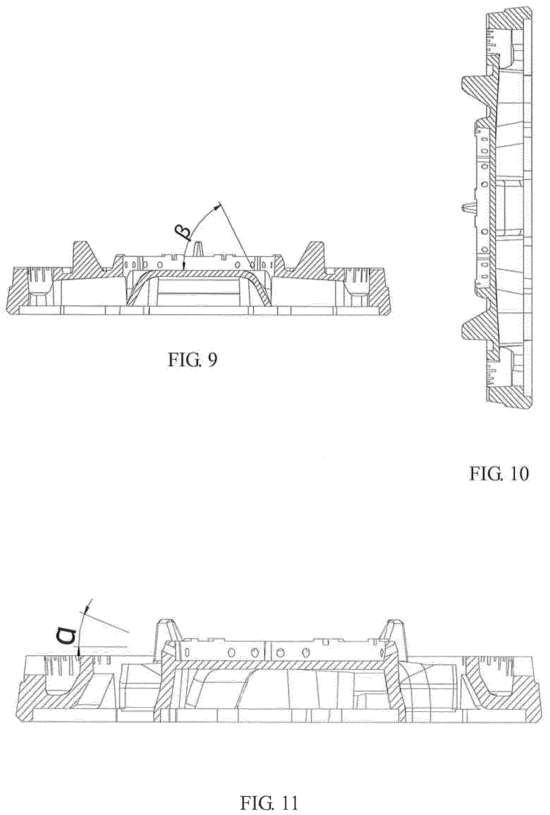

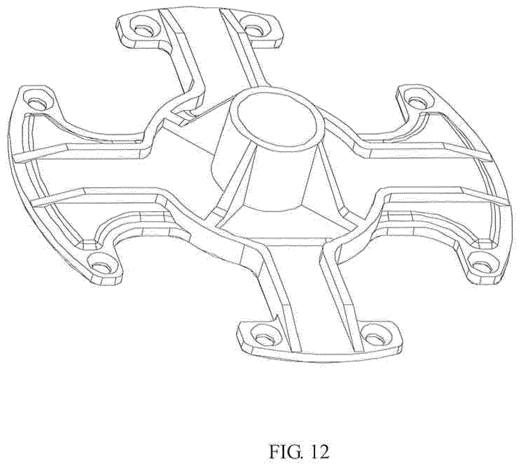

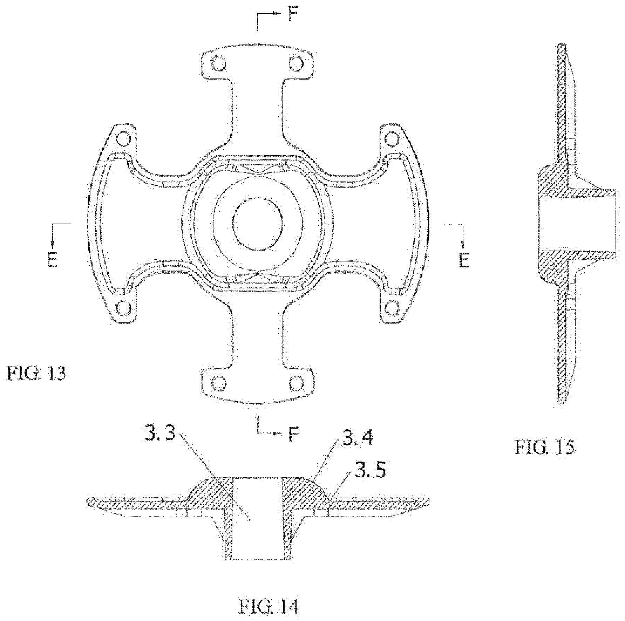

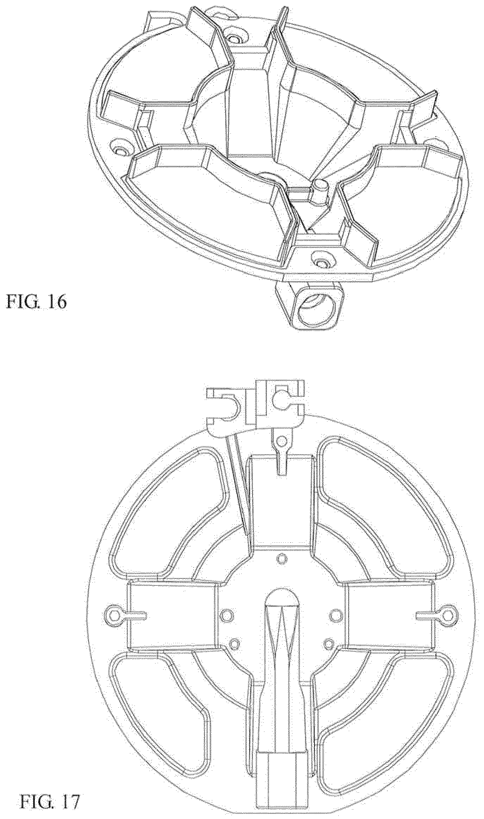

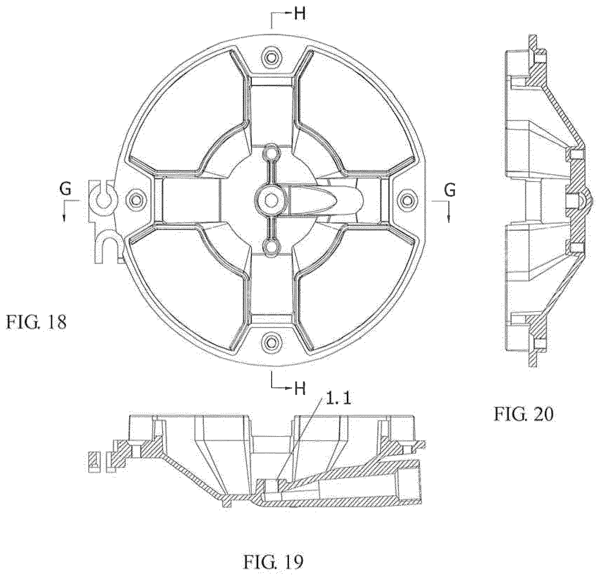

As seen from Figs. 1-20, the burner for gas ovens includes a tapered base 1 with a nozzle 2, a distributor mounted on the tapered base 1, an outer annular cover 5 and an inner circular cover 6, wherein the distributor includes a cross-shaped lower portion 3 and a upper portion 4 mated with the lower portion 3; wherein the tapered base 1 includes a tapered gas mixing chamber 1.3, a gas passage 1.1 in communication with the nozzle 2 and four symmetrically disposed air passages 1.2 one end of which being in communication with the tapered gas mixing chamber 1.3; the inlet of the air passages 1.2 is in the form of horn and in communication with outside. Further, the lower portion 3 has two wider arms on each of which a recess 3.1 with a depth of 1-1.5mm is formed and an oval boss 3.2 in the center thereof, an injecting passage 3.3 being formed in the center of the oval boss 3.2, the injecting passage 3.3 being in communication with the tapered gas mixing chamber 1.3; the bottom side of the upper portion 4 is provided with two symmetrical wide troughs 4.1, a central gas mixing chamber 4.2 in communication with the wide troughs 4.1 and two symmetrical narrow troughs 4.3 with barrier therein; the upper side of the upper portion 4 is provided with a central circular chamber 4.4 and an outer annular chamber 4.5, the outer annular chamber 4.5 having two symmetrically disposed gas outlets 4.6; one end of each wide trough 4.1 is in communication with the central gas mixing chamber 4.2 and the other with an outlet 4.6; the wide trough is wider than the narrow trough; the central gas mixing chambers 4.2, the wide troughs 4.1, the outlets 4.6 and the recesses 3.1 in the wide arms of the cross-shaped lower portion constitute two main gas passages 14, 15 for mixing, delivering and ejecting the gas and air; a gap of 2-3mm is configured between opposite surfaces of the central gas mixing chambers 4.2 and the oval boss 3.2; fire pores or slots are provided on the wall of the central circular chamber 4.4 and fire teeth are provided on the wall of the outer annular chamber 4.5; two inlets 4.7 are formed symmetrically in the outer annular chamber 4.5; the narrow troughs 4.3 are isolated from the central gas mixing chambers 4.2 by barriers 4.8; one end of each narrow trough 4.3 is in communication with the central circular chamber 4.4 and the other with the inlet 4.7; the narrow troughs 4.3, the inlets 4.7 and the other two arms 3.6 of the cross-shaped lower portion 3 constitute two additional gas passages 16,17 each of which is in communication with the central circular chamber 4.4.

In this embodiment, the oval boss 3.2 includes two arcwise surfaces corresponding to main gas passages 14,15, one of each surfaces includes a upper surface 3.4 with round of R18-R22mm and a lower surface 3.5 with round of R2-R4mm and said surfaces co-operative with the gas mixing chamber 4.2 to form two symmetrical Venturi mixing chambers 11,12; each of the additional gas passages 16,17 is isolated from the central gas mixing chamber 4.2 by the barrier 4.8, the portions of the oval boss 3.2 corresponding to the additional gas passages 16, 17 are vertical walls. In this embodiment, the main gas passages 14,15 are wider than the additional gas passages 16,17, and the width of the outlets 4.6 are adapted to that of the main gas passages, wherein the recesses 3.1 in the wide arms of the lower portion of the distributor have a depth of 1-1.5mm so as to increase the volume of the gas mixing chamber. Each of wide troughs 4.1 has a width W preferably in range of 26.5-29mm and a height HI preferably in the range of 7.5-9.5 mm.

In the embodiment, the oval boss 3.2 has a height in the range of 7.5-8.5mm and is preferably 8 mm.

In the embodiment, the angle α between the axis of the each fire pore of the central circular chamber 4.4 and the horizontal level is in the range of 20°-30°, preferably 22°.

In the embodiment, the barriers are inclined surfaces, each of which forms an angle β in the range of 60°-64°, preferably 62.5° with respect to the horizontal level, and each inclined surface is co-operative with the corresponding vertical wall of the cross-shaped lower portion to isolate the additional gas passages 16,17 from the central gas mixing chamber 4.2.

To assemble the burner according to this invention, firstly the nozzle 2 is mounted in the center of the tapered base 1 by thread and sealed such that the axis of the nozzle 2 coincides with the axis of the tapered base 1 vertically to ensure their concentricity, and then by means of riveting or screwing the lower portion 3 is fixed on the upper portion 4 such that the wide troughs 4.1 on the lower side of the upper portion 4 cooperate with the corresponding features in the wider arms of the lower portion 3 to form two main gas passages for delivering gas to the outer annular chamber 4.5 and at the same time the narrow troughs 4.3 on the lower side of the upper portion 4 cooperate with the corresponding features of the cross-shaped lower portion 3 to form two additional gas passages. Finally, the outer annular cover 5 is put on the outer annular chamber 4.5 of the upper portion and the inner circular cover 6 is put on the central circular chamber 4.4 of the upper portion.

In operation, gas is delivered through external pipe, the gas passage 1.1 and the nozzle 2 to the tapered gas mixing chamber 1.3 and then via the injecting passage 3.3 to the gas mixing chamber 4.2. When the gas is injected at high speed from the nozzle 2 into the injecting passage, air will be inhaled into the tapered gas mixing chamber 1.3 through the air passage 1.2 due to pressure difference. Then, the inhaled air mixes with the gas and the mixture introduced through the injecting passage 3.3 into two symmetrical Venturi mixing chambers 11, 12. During the operation, the mixture is accelerated through a plane gas mixing surface 13 before entering the outer annular chamber 4.5 via the two symmetrical main gas passages. Afterwards, the mixture is injected outwards from the fire pores or slots I and II on the outer annular chamber 4.5 and ignited by external firing device for burning. In the same time, a portion of the mixture in the outer annular chamber 4.5 will enter the central circular chamber 4.4 through the additional gas passages 16, 17 and then will be injected from the fire pores or slots III outwardly to the circumference of the burner and ignited by outer annular flame for burning.

As flames are arranged on three concentric rings with different diameters, the burner according to this invention may be used with pans of different shapes and sizes.

## Claims

1. A burner for gas ovens, comprising a tapered base (1) with a nozzle (2), a distributor mounted on the tapered base (1), an outer annular cover (5) and an inner circular cover (6), wherein the distributor includes a cross-shaped lower portion (3) and a upper portion (4) mated with the lower portion (3); the tapered base (1) includes a tapered gas mixing chamber (1.3), a gas passage (1.1) in communication with the nozzle (2) and four symmetrically disposed air passages (1.2) one end of which being in communication with the tapered gas mixing chamber (1.3); wherein the lower portion (3) has two wider arms on each of which a recess (3.1) with a depth of 1-1.5mm is formed and an oval boss (3.2) in the center thereof, an injecting passage (3.3) being formed in the center of the oval boss (3.2), the injecting passage (3.3) being in communication with the tapered gas mixing chamber (1.3); the bottom side of the upper portion (4) is provided with two symmetrical wide troughs (4.1), a central gas mixing chamber (4.2) in communication with the wide troughs (4.1) and two symmetrical narrow troughs (4.3) each with a barrier (4.8) therein; the upper side of the upper portion (4) is provided with a central circular chamber (4.4) and an outer annular chamber (4.5), the outer annular chamber (4.5) having two symmetrically disposed gas outlets (4.6); one end of each wide trough (4.1) is in communication with the central gas mixing chamber (4.2) and the other with a outlet (4.6); the wide trough is wider than the narrow trough; the central gas mixing chambers (4.2), the wide troughs (4.1), the outlets (4.6) and the recesses (3.1) in the wider arms of the cross-shaped lower portion constitute two main gas passages (14, 15) for mixing, delivering and ejecting the gas and air; a gap of 2-3mm is configured between opposite surfaces of the central gas mixing chambers (4.2) and the oval boss (3.2); fire pores or slots are provided on the wall of the central circular chamber (4.4) and fire teeth are provided on the wall of the outer annular chamber (4.5); two inlets (4.7) are formed symmetrically in the outer annular chamber (4.5); the narrow troughs (4.3) are isolated from the central gas mixing chambers (4.2) by barriers (4.8); one end of the each narrow trough (4.3) is in communication with the central circular chamber (4.4) and the other with a inlet (4.7); the two narrow troughs (4.3), the inlets (4.7) and the other two arms (3.6) of the cross-shaped lower portion (3) constitute two additional gas passages (16, 17), each of which is in communication with the central circular chamber (4.4).

2. A burner for gas ovens according to claim 1, wherein the oval boss (3.2) includes two arcwise surfaces corresponding to main gas passages (14, 15), one of each surfaces includes a upper surface (3.4) with a roundness of R18-R22mm and a lower surface (3.5) with a roundness of R2-R4mm and said surfaces co-operative with the gas mixing chamber (4.2) to form two symmetrical Venturi mixing chambers (11, 12); each of the additional gas passages (16, 17) is isolated from the central gas mixing chamber (4.2) by a barrier (4.8), the portions of the oval boss (3.2) corresponding to the additional gas passages (16, 17) are vertical walls.

3. A burner for gas ovens according to claim 1 or 2, wherein each of the wide troughs (4.1) has a width (W) preferably in the range of 26.5-29mm and a height (HI) preferably in the range of 7.5-9.5 mm.

4. A burner for gas ovens according to any of claims 1 to 3, wherein the oval boss (3.2) has a height in the range of 7.5-8.5mm, preferably about 8 mm.

5. A burner for gas ovens according to any of claims 1 to 4, wherein the axis of each fire pore of the central circular chamber (4.4) forms an angle α in the range of 20-30°, preferably about 22° with respect to the horizontal level.

6. A burner for gas ovens according to any of claims 1 to 5, wherein each of the barriers has an inclined surface which forms an angle β with respect to the horizontal level in the range of 60°-64°, preferably about 62.5°, wherein each inclined surface is co-operative with the corresponding vertical wall of the cross-shaped lower portion to isolate the additional gas passages (16, 17) from the central gas mixing chamber (4.2).

7. A burner for gas ovens according to any of claims 1 to 6, wherein the inlet of the each air passages (1.2) is in the form of a horn.

## Patentansprüche

1. Brenner für Gasöfen, welcher eine konische Basis (1) mit einer Düse (2) umfasst, einen auf der konischen Basis (1) befestigten Verteiler, eine äußere ringförmige Abdeckung (5) und eine innere ringförmige Abdeckung (6), worin der Verteiler einen kreuzförmigen unteren Bereich (3) und einen oberen, zu dem unteren Bereich (3) passenden Bereich (4) aufweist; worin die konische Basis (1) eine konische Gas-Mischkammer (1.3) aufweist, eine mit der Düse (2) in Verbindung stehende Gasleitung (1.1) und vier symmetrisch angeordnete Luftleitungen (1.2), deren eines Ende mit der konischen Gas-Mischkammer (1.3) in Verbindung steht; worin der untere Bereich (3) zwei weite Arme aufweist, auf denen jeweils eine Vertiefung (3.1) mit einer Tiefe von 1-1,5mm und ein ovaler Knopf (3.2) in Zentrum davon ausgebildet ist, worin eine Einspritzleitung (3.3) im Zentrum des ovalen Knops (3.2) ausgebildet ist, worin die Einspritzleitung (3.3) mit der konischen Gas-Mischkammer (1.3) in Verbindung steht; worin die untere Seite des oberen Bereichs (4) mit zwei symmetrischen weiten Trögen (4.1) versehen ist, worin eine zentrale Gas-Mischkammer (4.2) mit den weiten Trögen (4.1) und zwei symmetrischen engen Trögen (4.3) mit jeweils einer Barriere (4.8) darin in Verbindung steht; worin die obere Seite (4) des oberen Bereichs mit einer zentralen ringförmigen Kammer (4.4) und einer äußeren ringförmigen Kammer (4.5) versehen ist, worin die äußere ringförmige Kammer (4.5) zwei symmetrisch angeordnete Gasauslässe (4.6) aufweist; worin ein Ende des jeweiligen weiten Trogs (4.1) mit der zentralen Gas-Mischkammer (4.2) in Verbindung steht und das andere mit einem Auslaß (4.6); worin der weite Trog weiter ist als der enge Trog; worin die zentrale Gas-Mischkammer (4.2), die weiten Tröge (4.1), die Auslässe (4.6) und die Vertiefungen (3.1) in den weiten Armen des kreuzförmigen Bereichs zwei Hauptgasleitungen (14, 15) zum Mischen, Liefern und Ausgeben von Gas und Luft darstellen; worin eine Lücke von 2-3mm zwischen gegenüberliegenden Oberflächen der zentralen Gas-Mischkammer (4.2) und des ovalen Knopfs (3.2) ausgebildet ist; worin Feuerporen oder -Schlitze an der Wand der zentralen ringförmigen Kammer (4.4) vorgesehen sind und Feuerzähne an der Wand der äußeren ringförmigen Kammer (4.5) vorgesehen sind; worin zwei Einlässe (4.7) symmetrisch in der äußeren ringförmigen Kammer (4.5) ausgebildet sind; worin die engen Tröge (4.3) von der zentralen Gas-Mischkammer (4.2) durch Barrieren (4.8) isoliert sind; worin ein Ende eines jeden engen Trogs (4.3) mit der zentralen ringförmigen Kammer (4.4) in Verbindung steht und das Andere mit einem Einlass (4.7) in Verbindung steht; worin die zwei engen Tröge (4.3), die Einlässe (4.7) und die anderen zwei Arme (3.6) des kreuzförmigen unteren Bereichs (3) zwei zusätzliche Gasleitungen (16, 17) darstellen, die jeweils mit der zentralen ringförmigen Kammer (4.4) in Verbindung stehen.

2. Brenner für Gasöfen nach Anspruch 1, worin der ovale Knopf (3.2) zwei bogenförmige Oberflächen entsprechend den Haupt-Gasleitungen (14, 15) umfasst, worin eine der jeweiligen Oberflächen eine obere Oberfläche (3.4) mit einer Rundung von R18-R22mm und einer unteren Oberfläche (3.5) mit einer Runding von R2-R4mm umfasst, und worin die Oberflächen mit der Gas-Mischkammer (4.2) unter Bildung von zwei symmetrischen Venturi-Mischkammern (11, 12) zusammen wirken; worin jede der zusätzlichen Gasleitungen (16, 17) von der zentralen Gas-Mischkammer (4.2) durch eine Barriere (4.8) isoliert ist, worin die Bereiche des ovalen Knopfs (3.2) entsprechend den zusätzlichen Gasleitungen (16, 17) vertikale Wände sind.

3. Brenner für Gasöfen 1 oder 2, worin jeder der weiten Tröge (4.1) eine Weite (W) aufweist, vorzugsweise im Bereich von 26,5-29 mm, und eine Höhe (H1), vorzugsweise in dem Bereich von 7.5-9.5 mm.

4. Brenner für Gasöfen nach einem der Ansprüche 1 bis 3, worin der ovale Knopf (3.2) eine Höhe im Bereich von 7,5-8,5mm aufweist, vorzugsweise etwa 8 mm.

5. Brenner für Gasöfen nach einem der Ansprüche 1 bis 4, worin die Achse einer jeden Feuerpore der zentralen ringförmigen Kammer (4.4) einen Winkel α im Bereich von 20-30° aufweist, vorzugsweise etwa 22° in Bezug auf die horizontalen Ebene.

6. Brenner für Gasöfen nach einem der Ansprüche 1 bis 5, worin jede der Barrieren eine geneigte Oberfläche aufweist, die einen Winkel β in Bezug zu der horizontalen Ebene im Bereich von 60°-64° aufweist, vorzugsweise etwa 62,5°, worin jede geneigte Oberfläche mit der entsprechenden vertikalen Wand des kreuzförmigen unteren Bereichs zusammenwirkt, um die zusätzlichen Gasleitungen (16,17) von der zentralen Gas-Mischkammer (4.2) zu isolieren.

7. Brenner für Gasöfen nach einem der Ansprüche 1 bis 6, worin der Einlass einer jeden Luftleitungen (1.2) die Form eines Horns aufweist.

## Revendications

1. Brûleur pour fours à gaz, comprenant une base effilée (1) ayant une buse (2), un distributeur monté sur la base effilée (1), un couvercle annulaire externe (5) et un couvercle circulaire interne (6), le distributeur comprenant une partie inférieure en forme de croix (3) et une partie supérieure (4) couplée à la partie inférieure (3) ; la base effilée (1) comprenant une chambre de mélange de gaz effilée (1.3), un passage de gaz (1.1) en communication avec la buse (2) et quatre passages d'air (1.2) disposés de manière symétrique, dont une extrémité est en communication avec la chambre de mélange de gaz effilée (1.3) ; la partie inférieure (3) ayant deux bras plus larges sur chacun desquels un renfoncement (3.1) ayant une profondeur de 1 - 1,5 mm est formé et un bossage ovale (3.2) au centre de celui-ci, un passage d'injection (3.3) étant formé au centre du bossage ovale (3.2), le passage d'injection (3.3) étant en communication avec la chambre de mélange de gaz effilée (1.3) ; le côté inférieur de la partie supérieure (4) étant muni de deux creux larges symétriques (4.1), d'une chambre de mélange de gaz centrale (4.2) en communication avec les creux larges (4.1), et de deux creux étroits symétriques (4.3) ayant chacun une barrière (4.8) à l'intérieur ; le côté supérieur de la partie supérieure (4) étant muni d'une chambre circulaire centrale (4.4) et d'une chambre annulaire externe (4.5), la chambre annulaire centrale (4.5) ayant deux sorties de gaz disposées de manière symétrique (4.6) ; une extrémité de chaque creux large (4.1) étant en communication avec la chambre de mélange de gaz centrale (4.2) et l'autre avec une sortie (4.6) ; le creux large étant plus large que le creux étroit ; les chambres de mélange de gaz centrales (4.2), les creux larges (4.1), les sorties (4.6) et les renfoncements (3.1) dans les bras plus larges de la partie inférieure en forme de croix constituant deux passages de gaz principaux (14, 15) pour mélanger, délivrer et éjecter le gaz et de l'air ; un intervalle de 2 - 3 mm étant configuré entre des surfaces opposées des chambres de mélange de gaz centrales (4.2) et le bossage central (3.2) ; des fentes ou orifices pour feu étant prévus sur la paroi de la chambre circulaire centrale (4.4) et des dents pour feu étant prévues sur la paroi de la chambre annulaire externe (4.5) ; deux entrées (4.7) étant formées de manière symétrique dans la chambre annulaire externe (4.5) ; les creux étroits (4.3) étant isolés des chambres de mélange de gaz centrales (4.2) par des barrières (4.8) ; une extrémité de chaque creux étroit (4.3) étant en communication avec la chambre circulaire centrale (4.4) et l'autre avec une entrée (4.7) ; les deux creux étroits (4.3), les entrées (4.7) et les deux autres bras (3.6) de la partie inférieure en forme de croix (3) constituant deux passages de gaz supplémentaires (16, 17), dont chacun est en communication avec la chambre circulaire centrale (4.4).

2. Brûleur pour fours à gaz selon la revendication 1, dans lequel le bossage ovale (3.2) comprend deux surfaces en forme d'arc correspondant aux passages de gaz principaux (14, 15), chaque surface comprenant une surface supérieure (3.4) avec un arrondi de R18-R22 mm et une surface inférieure (3.5) avec un arrondi de R2-R4 mm, et lesdites surfaces coopérant avec la chambre de mélange de gaz (4.2) pour former deux chambres de mélange à Venturi symétriques (11, 12) ; chacun des passages de gaz supplémentaires (16, 17) est isolé de la chambre de mélange de gaz centrale (4.2) par une barrière (4.8), les parties du bossage ovale (3.2) correspondant aux passage de gaz supplémentaires (16, 17) sont des parois verticales.

3. Brûleur pour fours à gaz selon la revendication 1 ou 2, dans lequel chacun des creux larges (4.1) a une largeur (W) de préférence dans la plage de 26,5 - 29 mm et une hauteur (H1) de préférence dans la plage de 7,5 - 9,5 mm.

4. Brûleur pour fours à gaz selon l'une quelconque des revendications 1 à 3, dans lequel le bossage ovale (3.2) a une hauteur dans la plage de 7,5 - 8,5 mm, de préférence d'environ 8 mm.

5. Brûleur pour fours à gaz selon l'une quelconque des revendications 1 à 4, dans lequel l'axe de chaque orifice pour feu de la chambre circulaire centrale (4.4) forme un angle α dans la plage de 20 - 30°, de préférence d'environ 22°, par rapport au niveau horizontal.

6. Brûleur pour fours à gaz selon l'une quelconque des revendications 1 à 5, dans lequel chacune des barrières a une surface inclinée qui forme un angle β par rapport au niveau horizontal dans la plage de 60° - 64°, de préférence d'environ 62,5°, chaque surface inclinée coopérant avec la paroi verticale correspondante de la partie inférieure en forme de croix pour isoler les passages de gaz supplémentaires (16, 17) vis-à-vis de la chambre de mélange de gaz centrale (4.2).

7. Brûleur pour fours à gaz selon l'une quelconque des revendications 1 à 6, dans lequel l'entrée de chaque passage d'air (1.2) se présente sous la forme d'une corne.
